# EUROPÄISCHE PATENTSCHRIFT

(11) **EP 2 932 144 B1**
(45) Veröffentlichungstag und Bekanntmachung des Hinweises auf die Patenterteilung: **27.09.2017**
(21) Anmeldenummer: 13802327.0
(22) Anmeldetag: 04.12.2013
(51) Int. Cl.: F16L 11/12, F16L 57/06, B65G 43/02, B65G 53/52, G01M 3/40, G01M 5/00

(54) **SCHLAUCH MIT INTEGRIERTER DETEKTION VON BESCHÄDIGUNGEN**
TUBE WITH INTEGRATED DAMAGE DETECTION
TUYAU DOTÉ D'UN SYSTÈME INTÉGRÉ PERMETTANT DE DÉTECTER DES ENDOMMAGEMENTS

(30) Priorität: 17.12.2012 DE 102012112450
(43) Veröffentlichungstag der Anmeldung: 21.10.2015
(73) Patentinhaber: Eddelbüttel + Schneider GmbH, 21079 Hamburg (DE)
(72) Erfinder: KATONA, Tamas, 6728 Szeged (HU); PRINZ, Marcus, 25462 Rellingen (DE); LÄMMLE, Alexander, 86529 Schrobenhausen (DE); WETZEL, Guido, 86633 Neuburg a.d. Donau (DE); GREPALY, Istvan, 1125 Budapest (HU)
(74) Vertreter: Finger, Karsten
(86) Internationale Anmeldenummer: PCT/EP2013/075478
(87) Internationale Veröffentlichungsnummer: WO 2014/095368

(56) Entgegenhaltungen:
- EP-A2- 0 952 378
- WO-A1-00/61472
- WO-A1-2011/137539
- AT-U1- 6 114
- JP-A- 2007 132 371
- US-A1- 2010 174 495

## Beschreibung

Die Erfindung betrifft einen Schlauch mit integrierter Detektion von Beschädigungen sowie ein System zur Überwachung eines derartigen Schlauches.

Es sind zahlreiche Arbeiten bekannt, bei denen große Mengen von Massen befördert werden müssen, die sowohl Flüssigkeit als auch Festkörper aufweisen. Hiermit sind insbesondere Schlamm, Schlick, Matsch und ähnliche dickflüssige Gemische gemeint, wie sie z.B. bei der Ausbaggerung von Flussbetten, Fahrrinnen, Hafenbecken sowie beim Abräumen des Meeresbodens bewegt werden müssen. Auch fallen hierunter die Förderung aus Kies- und Sandgruben, bei denen das zu gewinnende Material mit Wasser vermischt gefördert wird. Ferner kann Abraummaterial in Steinbrüchen mit Wasser vermengt werden, um einfacher transportiert zu werden. Ebenso können auf diese Weise auch Massen befördert werden, die z.B. Rohstoffe enthalten, die aus dieser Masse später extrahiert werden sollen wie z.B. bei der Diamantenförderung oder Ölsandgewinnung. Hierunter fallen jedoch auch Massen, die aufgrund der Größe ihrer Einzelelemente auch ohne Flüssigkeiten in Schläuchen transportiert werden könne. Hierzu werden üblicherweise Schläuche aus elastomeren Materialien verwendet, die je nach Anwendungsfall einen Durchmesser von einigen 10cm bis zu mehreren Metern aufweisen können.

Nachteilig ist hierbei, dass die Festkörper des zu transportierenden Gemisches die Innenseite der Schlauchwand abreiben. Hierdurch kann diese im Laufe des Gebrauchs an wenigstens einer Stelle so beschädigt werden, z.B. als Riss aufgrund des Innendrucks der an dieser Stelle geschwächten Schlauchwand, dass das zu fördernde Gemisch hier austreten kann. Durch den Druckverlust kann die gesamte Förderung plötzlich zum Erliegen kommen, was die gesamte Anlage stilllegen kann. Derartige vollständige Ausfälle bzw. Stillstände großer und aufwendiger Anlagen wie z.B. ein Schwimmbagger, eine Kiesgrube, eine Mine oder ein Steinbruch, können enorme Kosten verursachen. Auch gehen durch derartige Risse Teile des eventuell kostbaren Fördergutes verloren, z.B. beim Abraum einer Diamant- oder Goldmine, bei der Ölsandförderung oder dergleichen. Ferner können durch das durch die Schadstelle austretende Fördergut Menschen gefährdet, die Anlage beschädigt und die Umwelt verschmutzt werden.

Um derartige Schadensfälle, insbesondere vollständige und unvorhersehbare Stillstände der Förderung zu vermeiden, ist es wünschenswert, derartige Schäden frühzeitig zu erkennen. Hierzu ist es bekannt, in regelmäßigen zeitlichen Abständen die Förderung anzuhalten, die Schläuche zu entleeren und zu spülen, deren Innenseite ggfs. zu reinigen und dann die Schlauchwand von Innen auf Schäden zu inspizieren, z.B. durch eine Person. Um hierbei die verbleibende Dicke der Schlauchwand besser abschätzen zu können, können in die Schlauchwand farbige Markierungen eingebracht werden, die mit zunehmender Abnutzung der Innenseite der Schlauchwand in Erscheinung treten und optisch erfasst werden können. Z.B. können radial übereinanderliegend grüne, gelbe und rote Markierungen, wie bei einer Ampel, in die Schlauchwand eingebracht sein, so dass bei geringer Abnutzung zuerst die grüne Markierung freigelegt wird, dann die gelbe und schließlich die rote, die dann auf eine baldige zu erwartende ernsthafte Beschädigung des Schlauches an dieser Stelle wie z.B. einen Riss hindeutet. Wird somit eine rote Markierung als freiliegend bei der Inspektion erkannt, kann der ganze Schlauch ausgetauscht werden, so dass der laufende Betrieb der Anlage mit einer höheren Wahrscheinlichkeit nicht unterbrochen werden muss als wenn keine derartige Überprüfung stattfinden würde.

Nachteilig ist hierbei, dass diese Überprüfungen einen sehr hohen Aufwand erfordern und hierfür auch die Nutzung des Schlauches unterbrochen werden muss. So ist es für die Inspektion von Innen erforderlich, den Betrieb zu unterbrechen, das restliche Fördergut aus dem Schlauch zu entfernen, diesen ggfs. zu spülen oder sogar dessen Innenseite zu reinigen und schließlich eine Person oder ein entsprechendes Inspektionsgerät die Überprüfung der Innenseite des Schlauches durchführen zu lassen. Dies verursacht Kosten für diesen Aufwand und durch den Stillstand der betreffenden Anlage.

Dokument JP 2007 132371 A offenbart einen Schlauch mit integrierter Detektion von Beschädigungen gemäß dem Oberbegriff von Anspruch 1.

Dokument WO 00/61472 A1 offenbart einen Schlauch zum Transportieren von abrasivem Material mit Sensoren zum Erfassen von Verschleiß des Schlauchs. Die Sensoren sind in Form von radial übereinander angeordneten, flächig ausgebildeten Sensierungsschichten ausgebildet.

Eine Aufgabe der vorliegenden Erfindung ist es daher, einen Schlauch mit integrierter Detektion von Beschädigungen bereit zu stellen, bei dem die zuvor beschriebenen Nachteile vermieden werden können, insbesondere einen Schlauch mit integrierter Detektion von Beschädigungen bereitzustellen, welcher einfach, zuverlässig und ohne Betriebsunterbrechung auf Beschädigungen der Schlauchwand untersucht werden kann. Die Aufgabe wird erfindungsgemäß durch einen Schlauch mit integrierter Detektion von Beschädigungen mit den Merkmalen gemäß Anspruch 1 sowie ein System zur Überwachung eines derartigen Schlauches mit den Merkmalen gemäß Anspruch 6 gelöst. Vorteilhafte Weiterbildungen sind in den Unteransprüchen beschrieben.

Somit betrifft die vorliegende Erfindung einen Schlauch mit integrierter Detektion von Beschädigungen mit einer Schlauchwand, die ein elastomeres Material aufweist. Der Schlauch ist dadurch gekennzeichnet, dass in der Schlauchwand eine Mehrzahl von Transpondern zur Detektion von Beschädigungen zur Innenseite der Schlauchwand hin eingebettet ist.

Unter einem Schlauch wird ein flexibles, bis auf die beiden Enden geschlossenes, vorzugsweise zylindrisches Gebilde verstanden, durch welches Medien strömen können, insbesondere Fluide und Fluidgemische, insbesondere Fluidgemische mit Bestandteilen an Festkörpern. Insbesondere sind im Sinne dieser Erfindung derartige Schläuche gemeint, die zum Transport von Gemischen eingesetzt werden können, deren Festkörperbestandteile die Innenseite der Schlauchwand abnutzen und damit beschädigen können. Eine derartige Abnutzung kann durch das Abreiben des Schlauchmaterials verursacht werden. Die vorliegende Erfindung ist jedoch auch auf starre und fest, d.h. nicht-flexible derartige Gebilde wie Rohre und dergleichen anwendbar, die einer derartigen Abnutzung unterliegen können.

Unter einem Transponder sollen Elemente verstanden werden, die eine Identifizierung mit Hilfe elektromagnetischer Wellen durchführen können. Dies können insbesondere sog. RFID-Transponder (radio-frequency identification) sein, die einen sie kennzeichnenden Code enthalten können, welcher berührungslos und zerstörungsfrei auch durch andere Materialien wie das elastomere Material der Schlauchwand ausgelesen werden kann. Die Transponder sind wenigstens in der Lage, ihre Anwesenheit bzw. Funktionstüchtigkeit durch die Rücksendung eines Signals anzuzeigen. Das Auslesen bzw. Identifizieren der Transponder kann über einen entsprechendes Lesegerät bzw. einen solchen Scanner erfolgen. Die Kopplung kann durch vom Lesegerät erzeugte magnetische Wechselfelder geringer Reichweite oder durch hochfrequente Radiowellen erfolgen. Damit können nicht nur Daten übertragen, sondern auch der Transponder mit Energie versorgt werden.

Der vorliegenden Erfindung liegt der Gedanke zugrunde, dass Transponder wie RFID-Transponder auch von außerhalb eines Objektes detektiert und ggfs. identifiziert werden können, d.h. ohne das Objekt beschädigen oder zerstören und den Transponder freilegen zu müssen. Im Umkehrschluss bedeutet dies, dass bei der vorliegenden Problemstellung die Anwesenheit bzw. Abwesenheit eines Transponders in der Schlauchwand auch von außen mittels eines entsprechenden Lesegerätes erfasst werden kann, ohne die Förderung des Materials im Inneren des Schlauches unterbrechen zu müssen. Damit kann von außen jederzeit überprüft werden, ob die Transponder an vorbestimmten Stellen des Schlauches noch vorhanden sind; hieraus kann geschlossen werden, dass die Schlauchwand an dieser Stelle noch nicht so weit abgenutzt wurde, dass der Transponder hierbei zerstört wurde. Ist die Tiefe innerhalb der Schlauchwand bekannt, an der der Transponder eingebettet positioniert wurde, so kann hierdurch auch die verbleibende Dicke der Schlauchwand an dieser Stelle abgeschätzt werden. Auf diese Weise können erfindungsgemäß Schwächungen der Wandstärke des Schlauches erkannt werden, ohne den Schlauch hierfür von Innen inspizieren zu müssen.

Die vorliegende Erfindung kann durch eine entsprechende Anordnung der Transponder auch dazu verwendet werden, den Schlauch alternativ oder zusätzlich auf äußere Beschädigungen zu überprüfen. Hierzu wären die Transponder so in der Schlauchwand vorzugsehen, z.B. zur Außenseite des Schlauches hin eingebettet, dass diese bei äußeren Einwirkungen beschädigt, zerstört bzw. aus dem Schlauchmaterial herausgelöst werden würden. Vorzugsweise wären Transponder sowohl zur Innenseite als auch zur Außenseite hin in der Schlauchwand einzubetten, so dass der Schlauch gleichzeitig sowohl auf Beschädigungen der Innenseite als auch der Außenseite überprüft werden könnte.

Die Transponder sind hierzu zur Innenseite der Schlauchwand hin eingebettet, so dass hierdurch Beschädigungen der Innenseite des Schlauches detektiert werden können. Weist die Schlauchwand einen mehrschichtigen Aufbau auf, sind die Transponder vorzugsweise in der innersten Schicht in radialer Richtung eingebettet oder in den innersten Schichten. Erfindungsgemäß sind die Transponder radial übereinander liegend in der Schlauchwand eingebettet.

Vorteilhaft ist hierbei, dass bei einer derartigen Anordnung sukzessive die Reduzierung der Schlauchwanddicke durch den fortschreitenden Ausfall der einzelnen Transponder verfolgt werden kann. Hierdurch kann z.B. auch eine Dicke der Schlauchwand detektiert werden, die an dieser Stelle noch vorhanden ist, zumindest in Intervallen, die dem Abstand der benachbarten Transponder in Richtung der Schlauchwand entsprechen. Auch können Kriterien angewendet werden, um die Schwere der Abreibung an einer Stelle des Schlauches zu definieren; z.B. kann der Ausfall des ersten Transponders als erste Warnung über einen Abrieb an dieser Stelle gewertet werden, der Ausfall des zweiten, radial an dieser Stelle weiter außen liegenden Transponders als Hinweis auf einen notwendigen Austausch des Schlauches bzw. Schlauchsegmentes beim nächsten planmäßigen Serviceintervall und schließlich der Ausfall eines dritten Transponders als Auslöser eines sofortigen Nothaltes der Anlage, um einen sehr wahrscheinlich unmittelbar bevorstehenden Riss des Schlauches an dieser Stelle noch zu verhindern.

Vorzugsweise sind die Transponder in Umfangsrichtung versetzt in der Schlauchwand eingebettet.

Auf diese Weise können die Transponder den gesamten Umfang des Schlauches an einer Stelle erfassen, d.h. über einen Querschnitt des Schlauches an einer Stelle seiner Länge. Dabei ist es ausreichend, jeweils einen einzelnen Transponder in radialer Richtung vorzusehen, so dass dessen Anwesenheit bzw. Abwesenheit detektiert werden kann. Vorzugsweise werden jedoch mehrere Transponder radial übereinanderliegend verwendet, um genauere Aussagen über den Abrieb der Schlauchwand treffen zu können. Die Transponder werden in Umfangsrichtung entweder gleichmäßig verteilt angeordnet, d.h. um jeweils den gleichen Winkel zueinander in Umfangsrichtung beabstandet wie z.B. 90°, oder können in einem vorbestimmten Bereich auch enger zueinander angeordnet werden, falls z.B. aufgrund der geplanten Anwendung des Schlauches ein Bereich bekannt ist, an dem eher mit Abrieb zu rechnen ist als in anderen Bereichen der Innenseite der Schlauchwand und der daher engmaschiger durch die Transponder überwacht werden soll. Vorzugsweise werden so viele Transponder in Umfangsrichtung eingesetzt und beabstandet angeordnet, dass an dieser Stelle eine zuverlässige Aussage über einen Abrieb getroffen werden kann, d.h. ein kritischer Abrieb rechtzeitig erkannt werden kann.

Vorzugsweise sind die Transponder in Längsrichtung versetzt in der Schlauchwand eingebettet.

Vorteilhaft ist hierbei, dass über die Länge des Schlauches mehrere Stellen durch Transponder überwacht werden können. Dabei sind die Transponder so in Längsrichtung voneinander beabstandet vorzusehen, dass aus Kosten- und Aufwandsgründen möglichst wenig Transponder verwendet werden müssen, jedoch eine zuverlässige Aussage über einen Abrieb über die gesamte Länge des Schlauches bzw. zumindest in relevanten Bereichen des Schlauches getroffen werden kann, d.h. ein kritischer Abrieb rechtzeitig erkannt werden kann. Werden Transponder sowohl in Umfangsrichtung als auch in Längsrichtung flächendeckend eingesetzt, kann hierdurch eine sehr zuverlässige Überwachung der Innenseite der Schlauchwand erfolgen.

Vorzugsweise weist jeder Transponder eine eindeutige Kennung auf.

Vorteilhaft ist hierbei, dass jeder Transponder hierdurch individuell erkannt werden kann und damit auch sein Ausfall. Ist die Position jedes Transponders im Schlauch bekannt, kann somit auch die Zerstörung jedes Transponders einer bestimmten Stelle der Schlauchwand eindeutig zugeordnet werden. Hierdurch kann auch der Abrieb, der die Zerstörung des Transponders verursacht hat, dieser Stelle der Schlauchwand zugeordnet werden.

Vorzugsweise ist jeder Transponder von einer löslichen Ummantelung, insbesondere Gel-Kapsel, in der Schlauchwand eingebettet ist.

Unter einer derartigen Ummantelung ist eine vollständige oder auch nur teilweise Einbettung des Transponders in ein weiteres Material innerhalb des elastomeren Materials der Schlauchwand zu verstehen, welches sich mit dieser nicht so weit verbindet, dass bei einer Unterbrechung der Schlauchwand zur Umgebung, z.B. zum Inneren des Schlauches, hin dieses Ummantelungsmaterial samt des hierin eingeschlossenen Transponders aus der Schlauchwand austreten kann. Als Material der Ummantelung können Flüssigkeiten inklusive dickflüssiger Materialien wie Gel verwendet werden oder auch körnige oder pulverige Materialien.

Gemäß einem weiteren Aspekt der vorliegenden Erfindung betrifft diese auch ein System zur Überwachung eines Schlauches auf Beschädigungen mit einem Schlauch wie zuvor beschrieben und einer Transponder-Erfassungseinheit, welche eingerichtet ist, die im Schlauch eingebetteten Transponder zu erfassen.

Ein derartiges System kann im Rahmen einer Förderanlage oder dergleichen, wo ein derartiger Schlauch zum Einsatz kommt, eingesetzt und betrieben werden, um den Schlauch während seines Einsatzes fortlaufend auf Abrieb an seiner Innenseite zu überwachen. Hierbei ist es ausreichend, dass durch die Transponder-Erfassungseinheit die Anwesenheit bzw. Abwesenheit eines Transponders an vorbestimmten Stellen des Schlauches erkannt wird. Als Transponder-Erfassungseinheit kommen insbesondere mobile Geräte in Frage, die über die Länge des Schlauches bewegt werden können. Dies kann manuell oder automatisiert geschehen. Unter einer Erfassung der Transponder wird insbesondere eine berührungslose und zerstörungsfreie Erfassung verstanden.

Vorzugsweise ist die Transponder-Erfassungseinheit eingerichtet, die im Schlauch eingebetteten Transponder eindeutig zu erkennen.

Vorteilhaft ist hierbei, dass auf diese Weise jeder einzelne Transponder individuell erkannt und damit auch seine Zerstörung einer vorbestimmten Stelle der Innenseite der Schlauchwand zugeordnet werden kann. Hierdurch lässt sich der Abrieb, der die Zerstörung des entsprechenden Transponders verursacht hat, eindeutig der Stelle zuordnen, an der der Transponder zuvor positioniert eingebettet war.

Vorzugsweise ist die Transponder-Erfassungseinheit eingerichtet, die im Schlauch eingebetteten Transponder einer Position über den Umfang des Schlauches und bzw. oder über die Länge des Schlauches zuzuordnen.

Vorteilhaft ist hierbei, dass auf diese Weise eine verbesserte Überwachung des Inneren der Schlauchwand auf Abrieb erfolgen kann. Ist die Transponder-Erfassungseinheit in der Lage, ihre eigene Position z.B. über die Länge des Schlauches zu erfassen, kann sie die Feststellung der Anwesenheit oder Abwesenheit eines Transponders dieser Position zuordnen und damit auch einen auftretenden Abrieb an dieser Stelle. Weisen die Transponder eine eindeutige Kennung auf und wird ein solcher Transponder detektiert, so kann die Transponder-Erfassungseinheit auch ohne eine eigene Erfassung ihrer Position diese über die Identifizierung eines Transponders erkennen.

Vorzugsweise ist die Transponder-Erfassungseinheit an einer vorgegebenen Position des Schlauches, vorzugsweise an einem Ende des Schlauches, besonders bevorzugt an dem Ende des Schlauches, welches einen Auslass darstellt, vorgesehen.

Vorteilhaft ist hierbei, dass mit einer Transponder-Erfassungseinheit an einer vorgegebenen Position alle Transponder über die gesamte Länge des Schlauches erfasst werden können. Dies geschieht vorzugsweise dadurch, dass die Transponder jeweils eine eindeutige Kennung aufweisen und die Positionen der in der Schlauchwand eingebetteten Transponder bekannt sind. Wird somit ein Transponder aus der Schlauchwand herausgelöst, kann er beim Vorbeiströmen an der Transponder-Erfassungseinheit von dieser erfasst und hierdurch seiner vorgegebenen Position in der Schlauchwand eine derartige Beschädigung bzw. ein derartiger Abrieb zugeordnet werden, dass dieser Transponder dort herausgelöst wurde. Wird die Transponder-Erfassungseinheit am Ende eines Schlauches in Strömungs- bzw. Förderrichtung vorgesehen, kann so mit einer Transponder-Erfassungseinheit der Schlauch über seine gesamte Länge überwacht werden. Ausführungsbeispiele und weitere Vorteile der Erfindung werden nachstehend im Zusammenhang mit den folgenden Figuren erläutert. Darin zeigt:
- Fig. 1: eine perspektivische schematische Darstellung eines Schlauches zur Förderung von Massen mit Festkörpern und Flüssigkeit;
- Fig. 2: ein schematische Schnittdarstellung eines erfindungsgemäßen Schlauches bzw. Systems gemäß einem ersten Ausführungsbeispiel, und
- Fig. 3a bis 3c: einer schematischen Schnittdarstellung eines erfindungsgemäßen Schlauches bzw. Systems gemäß einem zweiten Ausführungsbeispiel.

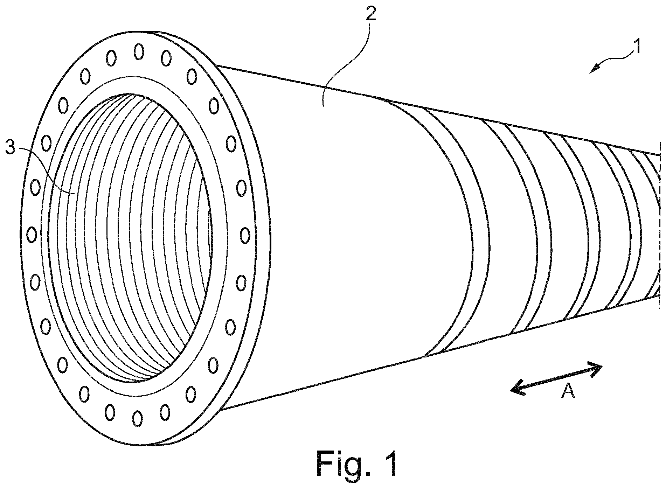

Fig. 1 zeigt eine perspektivische schematische Darstellung eines Schlauches 1 zur Förderung von Massen mit Festkörpern und Flüssigkeit. Der Schlauch 1 weist eine Schlauchwand 2 mit einer Innenseite 3 auf.

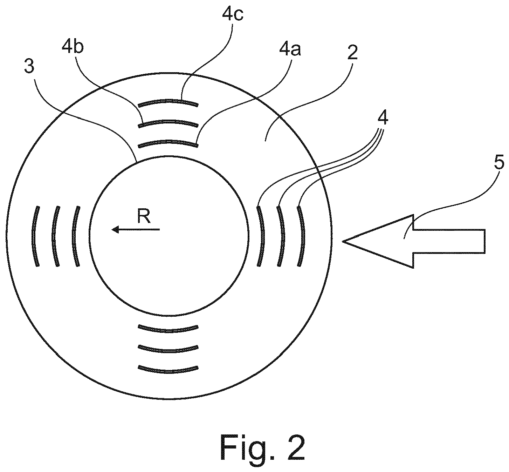

Fig. 2 zeigt eine schematische Schnittdarstellung eines erfindungsgemäßen Schlauches 1 bzw. Systems gemäß einem ersten Ausführungsbeispiel. In der Schlauchwand 2 ist eine Mehrzahl von Transpondern 4 zur Innenseite der Schlauchwand 3 hin eingebettet, d.h. die Transponder 4 sind in dem Material des Schlauches 1 in radialer Richtung R näher an der Innenseite 3 der Schlauchwand 2 als an der Außenseite angeordnet. Erfindungsgemäß sind mehrere Transponder 4 radial beabstandet zueinander angeordnet. Der innerste dieser Transponder 4a ist in radialer Richtung R näher an der Innenseite 3 der Schlauchwand 2 vorgesehen als der äußerste Transponder 4c an der Außenseite. Diese Transponder 4 sind in diesem Ausführungsbeispiel um 90° zueinander versetzt in Umfangsrichtung angeordnet und bilden jeweils eine Gruppe aus drei einzelnen Transpondern 4a, 4b, 4c. Die Transponder 4a, 4b, 4c sind von innen nach außen radial übereinander so angeordnet, dass bei einem an dieser Stelle auftretenden Abrieb des Materials der Schlauchwand 2 zuerst der innerste Transponder 4a, dann der nächste Transponder 4b und schließlich der äußerste Transponder 4c abgerieben und damit zerstört werden würde.

Zur Erkennung der Transponder 4 ist eine Transponder-Erfassungseinheit 5 vorgesehen, die in der Darstellung der Fig. 2 über einer Gruppe von Transpondern 4a, 4b, 4c angeordnet ist. Mittels der Transponder-Erfassungseinheit 5 kann die Anwesenheit bzw. Abwesenheit der Transponder 4 zumindest erkannt werden; weisen die Transponder 4 über jeweils eine individuelle eindeutige Kennung auf, kann auch diese durch die Transponder-Erfassungseinheit 5 ausgelesen werden.

Durch das Erkennen der Abwesenheit eines Transponders 4 an einer vorbestimmten Position des Schlauches 2 kann ein Abrieb bzw. eine Beschädigung der Innenseite des Schlauchwand 2 erkannt werden, ohne den Einsatz des Schlauches hierfür unterbrechen zu müssen, wie dies bisher z.B. bei in den Schlauchwand eingebetteten optischen Markierungen erforderlich war. Dies vereinfacht die Inspektion des Schlauches erheblich.

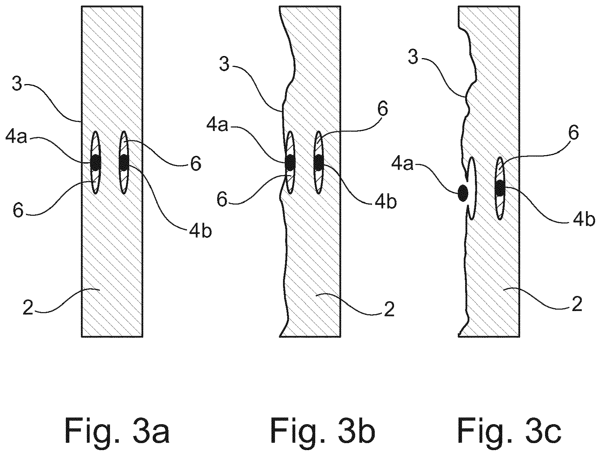

Fig. 3a bis 3c zeigen eine schematische Schnittdarstellung eines erfindungsgemäßen Schlauches 1 bzw. Systems gemäß einem zweiten Ausführungsbeispiel. Dieses unterscheidet sich von dem ersten Ausführungsbeispiel lediglich dadurch, dass die Transponder 4 jeweils in einer löslichen Ummantelung in Form einer Gel-Kapsel 6 eingeschlossen in der Schlauchwand 2 eingebettet sind. Die Transponder 4 haften hierdurch nicht am Material der Schlauchwand 2 sondern sind innerhalb der Gel-Kapsel 6 frei beweglich. Wird die Innenseite 3 der Schlauchwand 2 im Bereich eines Transponders 4 soweit abgerieben, dass das Material der Gel-Kapsel 6 in das Innere des Schlauches 1 austreten kann, so wird erfindungsgemäß der jeweilige Transponder 4 mit diesem Material und dem Fördergut des Schlauches 1 ausgespült, siehe Fig. 3b und 3c. Hierdurch wird der Transponder 4 nicht beschädigt und dennoch von seiner vorgegebenen Position in der Schlauchwand 2 entfernt. Er kann dann an einer vorgegebenen Stelle des Schlauches 1, vorzugsweise beim Austritt des Fördergutes aus dem Schlauch 1, detektiert werden. Weist der Transponder 4 eine eindeutige Kennung auf, kann der Transponder 4 über diese beim Austritt auch eindeutig identifiziert werden. Sind die Positionen der Transponder 4 in der Schlauchwand 2 bekannt, so kann auf diese Weise auch der ausgespülte Transponder 4 seiner Position in der Schlauchwand 2 eindeutig zugeordnet und eine Beschädigung an dieser Position erkannt werden, ohne den Schlauch 1 direkt untersuchen zu müssen.

### Bezugszeichenliste

### (Teil der Beschreibung)

- A: Längsrichtung des Schlauches 1
- R: Radius bzw. radiale Richtung des Schlauches 1

- 1: Schlauch
- 2: Schlauchwand
- 3: Innenseite der Schlauchwand 2
- 4: Transponder, insbesondere RFID-Chip
- 4a: erster Transponder bzw. RFID-Chip
- 4b: zweiter Transponder bzw. RFID-Chip
- 4c: dritter Transponder bzw. RFID-Chip
- 5: Transponder-Erfassungseinheit, insbesondere RFID-Chip-Scanner
- 6: lösliche Ummantelung, insbesondere Gel-Kapsel

## Patentansprüche

1. Schlauch (1) mit integrierter Detektion von Beschädigungen, mit
einer Schlauchwand (2), die ein elastomeres Material aufweist,
wobei in der Schlauchwand (2) eine Mehrzahl von Transpondern (4; 4a, 4b, 4c) zur Detektion von Beschädigungen zur Innenseite der Schlauchwand (3) hin eingebettet ist,
**dadurch gekennzeichnet, dass**
die Transponder (4; 4a, 4b, 4c) radial übereinander liegend in der Schlauchwand (2) eingebettet sind.

2. Schlauch (1) nach Anspruch 1,
wobei die Transponder (4; 4a, 4b, 4c) in Umfangsrichtung versetzt in der Schlauchwand (2) eingebettet sind.

3. Schlauch (1) nach einem der Ansprüche 1 oder 2,
wobei die Transponder (4; 4a, 4b, 4c) in Längsrichtung (A) versetzt in der Schlauchwand (2) eingebettet sind.

4. Schlauch (1) nach einem der vorherigen Ansprüche,
wobei jeder Transponder (4; 4a, 4b, 4c) eine eindeutige Kennung aufweist.

5. Schlauch (1) nach einem der vorherigen Ansprüche,
wobei jeder Transponder (4; 4a, 4b, 4c) von einer löslichen Ummantelung (6), insbesondere Gel-Kapsel (6), in der Schlauchwand (2) eingebettet ist.

6. System zur Überwachung eines Schlauches (1) auf Beschädigungen, mit
einem Schlauch (1) nach einem der vorherigen Ansprüche, und
einer Transponder-Erfassungseinheit (5), welche eingerichtet ist, die im Schlauch (1) eingebetteten Transponder (4; 4a, 4b, 4c) zu erfassen.

7. System nach Anspruch 6,
wobei die Transponder-Erfassungseinheit (5) eingerichtet ist, die im Schlauch (1) eingebetteten Transponder (4; 4a, 4b, 4c) eindeutig zu erkennen.

8. System nach Anspruch 6 oder 7,
wobei die Transponder-Erfassungseinheit (5) eingerichtet ist, die im Schlauch (1) eingebetteten Transponder (4; 4a, 4b, 4c) einer Position über den Umfang des Schlauches (1) und/oder über die Länge des Schlauches (1) zuzuordnen.

9. System nach einem der Ansprüche 6 bis 8,
wobei die Transponder-Erfassungseinheit (5) an einer vorgegebenen Position des Schlauches (1), vorzugsweise an einem Ende des Schlauches (1), besonders bevorzugt an dem Ende des Schlauches (1), welches einen Auslass darstellt, vorgesehen ist.

## Claims

1. Tube (1) with integrated detection of damage, with a tube wall (2) which has an elastomeric material, a plurality of transponders (4; 4a, 4b, 4c) for the detection of damage being embedded in the tube wall (2) towards the inside of the tube wall (3),
**characterized in that**
the transponders (4; 4a, 4b, 4c) are embedded in the tube wall (2) so as to lie radially over one another.

2. Tube (1) according to Claim 1,
wherein the transponders (4; 4a, 4b, 4c) are embedded in the tube wall (2) so as to be offset in the circumferential direction.

3. Tube (1) according to either of Claims 1 and 2,
wherein the transponders (4; 4a, 4b, 4c) are embedded in the tube wall (2) so as to be offset in the longitudinal direction (A).

4. Tube (1) according to one of the preceding claims, wherein each transponder (4; 4a, 4b, 4c) has a unique identifier.

5. Tube (1) according to one of the preceding claims, wherein each transponder (4; 4a, 4b, 4c) is embedded in the tube wall (2) by a soluble sheath (6), in particular a gel capsule (6).

6. System for monitoring a tube (1) for damage, having a tube (1) according to one of the preceding claims, and a transponder detection unit (5), which is set up to detect the transponders (4; 4a, 4b, 4c) embedded in the tube (1).

7. System according to Claim 6,
wherein the transponder detection unit (5) is set up to detect the transponders (4; 4a, 4b, 4c) embedded in the tube (1) unambiguously.

8. System according to Claim 6 or 7,
wherein the transponder detection unit (5) is set up to assign a position over the circumference of the tube (1) and/or over the length of the tube (1) to the transponders (4; 4a, 4b, 4c) embedded in the tube (1).

9. System according to one of Claims 6 to 8,
wherein the transponder detection unit (5) is provided at a predefined position of the tube (1), preferably at one end of the tube (1), particularly preferably at the end of the tube (1) which represents an outlet.

## Revendications

1. Tuyau flexible (1) auquel est intégrée une détection de dommages, présentant une paroi (2) de tuyau flexible présentant un matériau élastomère, plusieurs transpondeurs (4; 4a, 4b, 4c) de détection de dommages sur le côté intérieur de la paroi de tuyau flexible (3) étant incorporés dans la paroi (2) de tuyau flexible,
**caractérisé en ce que**
les transpondeurs (4; 4a, 4b, 4c) sont incorporés dans la paroi (2) du tuyau flexible en étant superposés radialement les uns sur les autres.

2. Tuyau flexible (1) selon la revendication 1, dans lequel les transpondeurs (4; 4a, 4b, 4c) sont incorporés dans la paroi (2) du tuyau flexible avec un décalage dans la direction périphérique.

3. Tuyau flexible (1) selon l'une des revendications 1 ou 2, dans lequel les transpondeurs (4; 4a, 4b, 4c) sont incorporés dans la paroi (2) du tuyau flexible en étant décalés dans le sens de la longueur (A).

4. Tuyau flexible (1) selon l'une des revendications précédentes, dans lequel chaque transpondeur (4; 4a, 4b, 4c) présente une identification claire.

5. Tuyau flexible (1) selon l'une des revendications précédentes, dans lequel chaque transpondeur (4; 4a, 4b, 4c) est incorporé dans la paroi (2) du tuyau flexible par une enveloppe (6) libérable, en particulier une encapsulation (6) dans un gel.

6. Système de surveillance des dommages sur un tuyau flexible (1), avec un tuyau flexible (1) selon l'une des revendications précédentes et une unité (5) de détection de transpondeurs conçue pour saisir les transpondeurs (4; 4a, 4b, 4c) incorporés dans le tuyau flexible (1).

7. Système selon la revendication 6, dans lequel l'unité (5) de détection de transpondeurs est conçue pour reconnaître sans équivoque les transpondeurs (4; 4a, 4b, 4c) incorporés dans le tuyau flexible (1).

8. Système selon la revendication 6 ou 7, dans lequel l'unité (5) de détection de transpondeurs est conçue pour associer les transpondeurs (4; 4a, 4b, 4c) incorporés dans le tuyau flexible (1) à une position sur la périphérie du tuyau flexible (1) et/ou sur la longueur du tuyau flexible (1).

9. Système selon l'une des revendications 6 à 8, dans lequel l'unité (5) de détection de transpondeurs est prévue à une position prédéterminée du tuyau flexible (1), de préférence à une extrémité du tuyau flexible (1) et de façon particulièrement préférable à l'extrémité du tuyau flexible (1) qui constitue une sortie.
